(19)

Europäisches
Patentamt
European
Patent Office
Office européen
des brevets

(11) **EP 4 525 170 A1**

(12) **EUROPEAN PATENT APPLICATION**
published in accordance with Art. 153(4) EPC

(43) Date of publication:
**19.03.2025 Bulletin 2025/12**

(21) Application number: **23802997.9**

(22) Date of filing: **11.05.2023**

(51) International Patent Classification (IPC):
***H01M 50/342*** (2021.01)

(52) Cooperative Patent Classification (CPC):
**H01M 50/3425; F16K 17/18; H01M 50/342;**
**H01M 2220/20**

(86) International application number:
**PCT/CN2023/093513**

(87) International publication number:
**WO 2023/217228 (16.11.2023 Gazette 2023/46)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.05.2022 CN 202221128927 U**

(71) Applicant: **BYD Company Limited**
**Shenzhen, Guangdong 518118 (CN)**

(72) Inventors:
• **ZHU, Yan**
**Shenzhen, Guangdong 518118 (CN)**
• **SUN, Zenan**
**Shenzhen, Guangdong 518118 (CN)**
• **LIU, Xufeng**
**Shenzhen, Guangdong 518118 (CN)**
• **WANG, Xinyue**
**Shenzhen, Guangdong 518118 (CN)**

(74) Representative: **Mathys & Squire**
**The Shard**
**32 London Bridge Street**
**London SE1 9SG (GB)**

(54) **EXPLOSION-PROOF VALVE, BATTERY, BATTERY MODULE, BATTERY PACK AND VEHICLE**

(57) A vehicle provided with a battery pack, the battery pack comprising a battery or a battery module, the battery comprising an explosion-proof valve, the explosion-proof valve comprising an explosion-proof valve body, an edge of the explosion-proof valve body being provided with a connection segment, the explosion-proof valve body being provided with a notched groove, the explosion-proof valve body being provided with an opening area, and the opening area being located on the radial inner side of the connection segment. In the depth direction of the notched groove, the shape of the orthographic projection of the explosion-proof valve body and the shape of the orthographic projection of the opening area are both non-circular, the outer edge of the orthographic projection of the opening area is a predetermined opening boundary, the area of the orthographic projection of the opening area is $S_{opening}$, the area of the orthographic projection of the connection segment is $S_{connection}$, the area of the orthographic projection of the explosion-proof valve body is $S_{total}$, and $S_{opening}$, $S_{connection}$ and $S_{total}$ meet: $10\% < S_{connection}/(S_{total} - S_{opening}) < 65\%$.

**EP 4 525 170 A1**

FIG. 1

## Description

### CROSS-REFERENCE TO RELATED APPLICATION

This application claims priority to and benefits of Chinese Patent Application No. 202221128927.X, filed on May 12, 2022. The entire content of the above-referenced application is incorporated herein by reference.

### FIELD

The present disclosure relates to the technical field of batteries, and specifically to an explosion-proof valve, a battery, a battery module, a battery pack, and a vehicle.

### BACKGROUND

In the related art, an explosion-proof valve of a battery is usually welded to a cover plate of the battery. When the gas pressure in the battery exceeds the opening pressure of the explosion-proof valve, the explosion-proof valve is opened to release the gas generated inside the battery, thereby preventing safety accidents such as explosion of the battery. However, when the pressure in the battery changes and becomes too high, unstable welding of the explosion-proof valve to the battery is likely to cause the entire explosion-proof valve to fall off from the battery during pressure relief, affecting the safety of the battery and the entire battery system.

### SUMMARY

The present disclosure aims to resolve at least one of the technical problems in the related art. Therefore, a first objective of the present disclosure is to provide an explosion-proof valve, which can effectively improve the connection stability and the connection strength of the connection section of the explosion-proof valve. When the explosion-proof valve is applied to a battery, the safety of the battery and the entire battery system are ensured.

A second objective of the present disclosure is to provide a battery using the explosion-proof valve.

A third objective of the present disclosure is to provide a battery module using the battery.

A fourth objective of the present disclosure is to provide a battery pack using the battery module or the battery.

A fifth objective of the present disclosure is to provide a vehicle using the battery pack.

An embodiment of a first aspect of the present disclosure provides an explosion-proof valve, including an explosion-proof valve body, the explosion-proof valve body having a connection section at an edge thereof, a scored groove being provided on the explosion-proof valve body, the explosion-proof valve body having an opening region, the opening region being located on a radial inner side of the connection section, a shape of an orthographic projection of the explosion-proof valve body and a shape of an orthographic projection of the opening region in a depth direction of the scored groove being both non-circular, an outer edge of the orthographic projection of the opening region being a predetermined opening boundary, an area of the orthographic projection of the opening region being defined as $S_{open}$, an area of an orthographic projection of the connection section being defined as $S_{connect}$, and an area of the orthographic projection of the explosion-proof valve body being defined as $S_{total}$, $S_{open}$, $S_{connect}$, and $S_{total}$ meeting: $10\% < S_{connect}/(S_{total} - S_{open}) < 65\%$, and $S_{open}$, $S_{connect}$, and $S_{total}$ being measured in $mm^2$.

According to the explosion-proof valve of the embodiment of the present disclosure, by setting $S_{open}$, $S_{connect}$, and $S_{total}$ to meet $10\% < S_{connect}/(S_{total} - S_{open}) < 65\%$, the accurate design of parameters of the explosion-proof valve can effectively improve the connection stability and the connection strength of the connection section of the explosion-proof valve. When the explosion-proof valve is applied to a battery, a stable connection between the explosion-proof valve and the battery can be effectively ensured, so that the opening region can be smoothly opened during pressure relief of the battery, thereby effectively avoiding the problem in the related art that the explosion-proof valve is completely blown open to affect the safety of the battery due to the weak connection strength of the explosion-proof valve. In other words, with the use of the explosion-proof valve according to the embodiment of the present disclosure, the safety of the battery and the entire battery system can be effectively ensured.

In some examples, the shape of the orthographic projection of the opening region in the depth direction of the scored groove is oblong; the scored groove includes two first straight line segments arranged in parallel and two first arc segments arranged oppositely, two ends of each of the first straight line segments are respectively connected to the two first arc segments, and the two first straight line segments and the two first arc segments constitute a closed annular structure; and an outer edge of the orthographic projection of the scored groove in the depth direction of the scored groove constitutes the predetermined opening boundary.

In some examples, a length of each of the first straight line segments is defined as a, and a distance between outer sides of the two first straight line segments is defined as b, where $S_{open}$, a, and b respectively meet: $S_{open} = a \times b + \pi b^2/4$, $10\ mm \leq a \leq 50\ mm$, and $3\ mm \leq b \leq 30\ mm$.

In some examples, the scored groove includes two first scored segments arranged oppositely and in an arc shape, a second scored segment in a straight shape, and two third scored segments spaced apart from each other and in a straight shape, the second scored segment is arranged in parallel with the third scored segments, two ends of the second scored segment are respectively connected to the two first scored segments, and each of the third scored segments is connected to the corresponding first scored segment; and in the depth direction of the scored groove, two free ends of the outer edge of the orthographic projection of the scored groove are connected to form a connecting line, and the connecting line and the outer edge of the orthographic projection of the scored groove jointly constitute the predetermined opening boundary.

In some examples, the scored groove includes a fourth scored segment in a straight shape and four fifth scored segments in a straight shape, and each of two ends of the fourth scored segment is connected to two fifth scored segments arranged at a preset angle $\alpha$; and in the depth direction of the scored groove, a fourth arc segment is defined between free ends of orthographic projections of the two fifth scored segments at the same end of the fourth scored segment, the fourth arc segment is centered at a vertex of the preset angle, a fourth straight line segment is defined between the free ends of the orthographic projections of the two fifth scored segments on the same side of the fourth scored segment, and the two fourth arc segments and the two fourth straight line segments jointly constitute the predetermined opening boundary.

In some examples, in the depth direction of the scored groove, an outer peripheral edge of the orthographic projection of the connection section includes two second straight line segments arranged in parallel and two second arc segments arranged oppositely, two ends of each of the second straight line segments are respectively connected to the two second arc segments, and the two second straight line segments and the two second arc segments constitute a closed annular structure; and in the depth direction of the scored groove, the outer peripheral edge of the orthographic projection of the connection section is an outer peripheral edge of the orthographic projection of the explosion-proof valve body.

In some examples, a length of each of the second straight line segments is defined as A, and a distance between the two second straight line segments is defined as B, where $S_{total}$, A, and B respectively meet: $S_{total}=A{\times}B+{\pi}B^2/4$, 10 mm≤A≤70 mm, and 10 mm≤B≤60 mm.

In some examples, the connection section is an elongated ring shape extending in a circumferential direction of the explosion-proof valve body, an inner peripheral edge of the orthographic projection of the connection section in the depth direction of the scored groove includes two third straight line segments arranged in parallel and two third arc segments arranged oppositely, two ends of each of the third straight line segments are respectively connected to the two third arc segments, and a distance between the two third straight line segments is defined as B1, where $S_{connect}$ and $B_1$ respectively meet: $S_{connect}=S_{total}-{\pi}B_1^2/4-B_1{\times}A$, and 9 mm≤$B_1$≤59 mm.

In some examples, the explosion-proof valve body is elliptical or racetrack-shaped.

In some embodiments, 80 mm²≤$S_{open}$≤1600 mm², and 178.5 mm²≤$S_{total}$≤5212.5 mm².

An embodiment of a second aspect of the present disclosure provides a battery, including the explosion-proof valve according to the embodiment of the first aspect of the present disclosure.

In some examples, an energy density of the battery is defined as E, where E meets: 170 wh/kg≤E≤190 wh/kg.

An embodiment of a third aspect of the present disclosure provides a battery module, including the battery according to the embodiment of the second aspect of the present disclosure.

An embodiment of a fourth aspect of the present disclosure provides a battery pack, including the battery according to the embodiment of the second aspect or the battery module according to the embodiment of the third aspect of the present disclosure.

An embodiment of a fifth aspect of the present disclosure provides a vehicle, including the battery according to the embodiment of the second aspect of the present disclosure or the battery pack according to the embodiment of the fourth aspect of the present disclosure.

Additional aspects and advantages of the present disclosure will be partly given in and partly apparent from the description below, or understood through practice of the present disclosure.

## BRIEF DESCRIPTION OF THE DRAWINGS

The above and/or other additional aspects and advantages of the present disclosure become apparent and comprehensible from the description of embodiments in connection with accompanying drawings, in which:

FIG. 1 is a schematic diagram of an explosion-proof valve according to an embodiment of the present disclosure;
FIG. 2 is a schematic diagram of an explosion-proof valve according to another embodiment of the present disclosure;
FIG. 3 is a schematic diagram of an explosion-proof valve according to still another embodiment of the present disclosure;
FIG. 4 is a schematic diagram of a vehicle according to an embodiment of the present disclosure;
FIG. 5 is a schematic diagram of a vehicle according to another embodiment of the present disclosure; and
FIG. 6 is a schematic diagram of a vehicle according to still another embodiment of the present disclosure.

In the drawings:

explosion-proof valve body 100;

connection section 10; second straight line segment 11; second arc segment 12; third straight line segment 13; third arc segment 14;

opening region 20; predetermined opening boundary 201; scored groove21; first straight line segment 211; first arc segment 212; first scored segment 213; second scored segment 214; third scored segment 215; connecting line 216; fourth scored segment 217; fifth scored segment 218; fourth arc segment 219; fourth straight line segment 220;

explosion-proof valve 200; battery 300; battery module 400; battery pack 500; vehicle 600.

## DETAILED DESCRIPTION

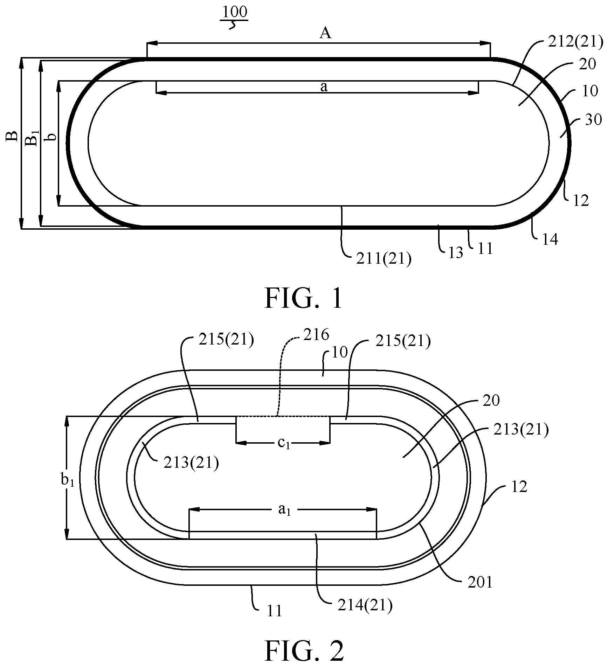

Embodiments of the present disclosure will be described in detail below. The embodiments described with reference to the accompanying drawings are merely examples. An explosion-proof valve 200 according to the embodiments of the present disclosure will be described below with reference to FIG. 1 to FIG. 3. The following description of the present disclosure is given with reference to an example where the explosion-proof valve 200 is mounted on a battery 300. When the internal pressure ofthe battery 300 increases, the explosion-proof valve 200 is configured to relieve the pressure in the battery 300.

As shown in FIG. 1, an embodiment of a first aspect of the present disclosure provides an explosion-proof valve 200, including an explosion-proof valve body 100.

Specifically, a scored groove 21 is provided on the explosion-proof valve body 100. A shape of an orthographic projection of the explosion-proof valve body 100 in a depth direction of the scored groove 21 (i.e., a direction from a groove top to a groove bottom of the scored groove 21) is non-circular. By such a configuration, the non-circular explosion-proof valve body 100 can better match a housing of the battery 300 or a cover plate of the battery 300 which may be in different shapes. The explosion-proof valve body 100 has a connection section 10 at an edge thereof. When the explosion-proof valve 200 is mounted on the battery 300, the explosion-proof valve 200 may be fixedly connected to the housing of the battery 300 or the cover plate of the battery 300 through the connection section 10. When the explosion-proof valve body 100 is fixed to the housing of the battery 300 by welding, a welding seam is formed between the explosion-proof valve body 100 and the housing. Alternatively, when the explosion-proof valve body 100 is fixed to the cover plate of the battery 300 by welding, a welding seam is formed between the explosion-proof valve body 100 and the cover plate. An outer peripheral edge of the explosion-proof valve body 100 is at one-half a width of the welding seam. The width of the welding seam is a distance between an outer contour and an inner contour of an orthographic projection of the welding seam in the depth direction of the scored groove 21. In the depth direction of the scored groove 21, an overlapping portion of the orthographic projection of the welding seam and the orthographic projection of the explosion-proof valve body 100 is an orthographic projection of the connection section. In other words, an outer peripheral edge of the connection section 10 coincides with the outer peripheral edge of the explosion-proof valve body 100, and an inner peripheral edge of the connection section 10 coincides with an inner peripheral edge of the welding seam. The "inner peripheral edge of the welding seam" is an edge of one side of the welding seam close to a center of the explosion-proof valve 200.

The explosion-proof valve body 100 has an opening region 20. A shape of an orthographic projection of the opening region 20 in the depth direction of the scored groove 21 is non-circular. For example, the shape of the orthographic projection of the opening region 20 may be the same as the shape of the orthographic projection of the explosion-proof valve body 100. An outer edge of the orthographic projection of the opening region 20 is a predetermined opening boundary 201. The scored groove 21 on the explosion-proof valve body 100 may extend along the predetermined opening boundary 201. The opening region 20 is located on a radial inner side of the connection section 10. When the internal pressure of the battery 300 increases, the pressure can be smoothly relieved through the explosion-proof valve 200 to protect the battery 300. In the depth direction of the scored groove 21, an area of the orthographic projection of the opening region 20 is defined as $S_{open}$, an area of the orthographic projection of the connection section 10 is defined as $S_{connect}$, and an area of the orthographic projection of the explosion-proof valve body 100 is defined as $S_{total}$. $S_{open}$, $S_{connect}$ and $S_{total}$ meet: $10\% < S_{connect}/(S_{total}-S_{open}) < 65\%$, and $S_{open}$, $S_{connect}$, and $S_{total}$ being measured in $mm^2$.

For example, when $S_{connect}/(S_{total}-S_{open}) \leq 10\%$ and $S_{total}$ remains unchanged, at least one of $S_{connect}$ and $S_{open}$ is relatively small, which may lead to a decrease in the stability of connection between the explosion-proof valve 200 and the battery 300, and is not conducive to the smooth opening of the opening region 20. When $S_{connect}/(S_{total}-S_{open}) \geq 65\%$ and $S_{total}$ remains unchanged, at least one of $S_{connect}$ and $S_{open}$ is relatively large, which may lead to an unduly high strength of the connection section 10 and a waste of materials, or may lead to a large area of the opening region 20 and affect the opening performance of the opening region 20. Therefore, by defining the ratio of the area of the orthographic projection of the connection section 10 to an area of the orthographic projection of the explosion-proof valve 200 other than the opening region 20 to be 10% to 65%, the connection strength of the connection section 10 and the opening performance of the opening region 20 can both be ensured, and the degree of stability of the explosion-proof valve 200 can be determined more accurately.

It can be understood that the larger the value of $S_{connect}/(S_{total}-S_{open})$, the higher the connection strength between the connection section 10 and the battery 300, and the better the stability of the explosion-proof valve 200. For example, the value of $S_{connect}/(S_{total}-S_{open})$ may be increased by increasing $S_{connect}$, or increasing $S_{open}$, or increasing both $S_{connect}$ and $S_{open}$.

According to the explosion-proof valve 200 of the embodiment of the present disclosure, by setting $S_{open}$, $S_{connect}$, and $S_{total}$ to meet $10\% < S_{connect}/(S_{total}-S_{open}) < 65\%$, the accurate design of parameters of the explosion-proof valve 200 can effectively improve the connection stability and the connection strength of the connection section 10 of the explosion-proof valve 200. When the explosion-proof valve 200 is applied to the battery 300, a stable connection between the explosion-proof valve 200 and the battery 300 can be effectively ensured, so that the opening region 20 can be smoothly opened during pressure relief of the battery 300, thereby effectively avoiding the problem in the related art that the explosion-proof valve 200 is completely blown open due to the weak connection strength of the explosion-proof valve 200, and therefore avoiding the impact on the safety of the battery 300. In other words, with the use of the explosion-proof valve 200 according to the embodiment of the present disclosure, the safety of the battery 300 and the entire battery system can be effectively ensured.

In some embodiments, $80\ mm^2 \leq S_{open} \leq 1600\ mm^2$, and $178.5\ mm^2 \leq S_{total} \leq 5212.5\ mm^2$. Such a configuration not only can ensure that the explosion-proof valve 200 has an adequate pressure relief capability, but also can ensure the stability of connection between the explosion-proof valve 200 and the housing of the battery 300 or the cover plate of the battery 300.

According to some embodiments of the present disclosure, referring to FIG. 1, the shape of the orthographic projection of the opening region 20 in the depth direction of the scored groove 21 may be oblong. Such a configuration can better match the explosion-proof valve 200 and can also match the shape of the housing or the cover plate (not shown) of the battery 300 using the explosion-proof valve 200. In addition, compared with a circular explosion-proof valve 200, the oblong opening region 20 can discharge a larger amount of gas per unit time, thereby providing a better pressure relief effect. The scored groove 21 includes two first straight line segments 211 arranged in parallel and two first arc segments 212 arranged oppositely. Two ends of each of the two first straight line segments 211 are respectively connected to the two first arc segments 212, so that the scored groove 21 can form a closed annular structure. An outer edge of the orthographic projection of the scored groove 21 in the depth direction of the scored groove 21 constitutes the predetermined opening boundary 201. That is, an area of a region defined by outer edges of the two first straight line segments 211 and the two first arc segments 212 is the area of the orthographic projection of the opening region 20.

A length of each of the first straight line segments 211 is defined as a, and a distance between outer sides of the two first straight line segments 211 is defined as b, where $S_{open}$, a, and b respectively meet: $S_{open}=a\times b+\pi b^2/4$, $10\ mm \leq a \leq 50\ mm$, and $3\ mm \leq b \leq 30\ mm$. For example, a=30 mm, and b=10 mm. However, the present disclosure is not limited thereto. Therefore, by defining the dimensions a and b, the safety of the battery 300 using the explosion-proof valve 200 is improved while ensuring that the opening region 20 can be smoothly opened and the pressure can be relieved in a timely manner. It can be understood that the outer side of the first straight line segment 211 is the side of the first straight line segment 211 away from the center of the explosion-proof valve 200.

A cross section of the scored groove 21 may be rectangular or inverted trapezoidal. "Cross-section" herein refers to a plane parallel to the depth direction of the scored groove 21. When the cross-section of the scored groove 21 is inverted trapezoidal, the width of the scored groove 21 gradually decreases toward the groove bottom of the scored groove 21. In this case, a may be understood as a length of an outer edge of the first straight line segment 211 at the groove top or opening, and b may be understood as a diameter of an outer edge of the first arc segment 212 at the groove top or opening. In other words, in the depth direction of the scored groove 21 (i.e., in the direction from the groove top to the groove bottom of the scored groove 21), the outer edge of the orthographic projection of the scored groove 21 includes two opposing semicircles, b may be understood as a diameter of the semicircles, and a may be understood as a distance between centers of the two semicircles.

In some embodiments, as shown in FIG. 2, the scored groove 21 is a C-shaped scored groove. The scored groove 21 includes two first scored segments 213 arranged oppositely and in an arc shape, a second scored segment 214 in a straight shape, and two third scored segments 215 spaced apart from each other and in a straight shape. The second scored segment 214 is arranged in parallel with the third scored segments 215. Two ends of the second scored segment 214 are respectively connected to the two first scored segments 213. Each of the third scored segments 215 is connected to the corresponding first scored segment 213. In other words, the second scored segment 214 is connected to one end of each of the two first scored segments 213, and an other end of each of the two first scored segments 213 is respectively connected to one third scored segment 215, and the two third scored segments 215 are spaced apart from each other. In the depth direction of the scored groove 21, two free ends of the outer edge of the orthographic projection of the scored groove 21 are connected to form a connecting line 216, and the outer edge of the orthographic projection of the scored groove 21 and the connecting line 216 jointly constitute the predetermined opening boundary 201. In this case, an area of a region defined within the predetermined opening boundary 201 (i.e., the area of the orthographic projection of the opening region 20 in the depth direction of the scored groove 21) is defined as $S_c$, and $S_c = a_1 \times b_1 + \pi \times b_1^2/4$. A total length of the scored groove 21 is defined as $L_c$, and $L_c = 2a_1 - c_1 + \pi b_1$. $a_1$ represents a length of the second scored segment 214, $b_1$ represents a distance between an outer side of the second scored segment 214 and an outer side of the third scored segment 215, and $c_1$ represents a distance between the two third scored segments 215. $c_1$ is a length of the connecting line 216.

A cross section of the scored groove 21 may be rectangular or inverted trapezoidal. "Cross-section" herein refers to a plane parallel to the depth direction of the scored groove 21. When the cross-section of the scored groove 21 is inverted trapezoidal, the width of the scored groove 21 gradually decreases toward the groove bottom of the scored groove 21. In this case, $a_1$ may be understood as a length of an outer edge of the second scored segment 214 at the groove top or opening, and $b_1$ may be understood as a diameter of an outer edge of the first scored segment 213 at the groove top or opening. In other words, in the depth direction of the scored groove 21 (i.e., in the direction from the groove top to the groove bottom of the scored groove 21), the outer edge of the orthographic projection of the scored groove 21 includes two opposing semicircles, $b_1$ may be understood as a diameter of the semicircles, and $a_1$ may be understood as a distance between centers of the two semicircles.

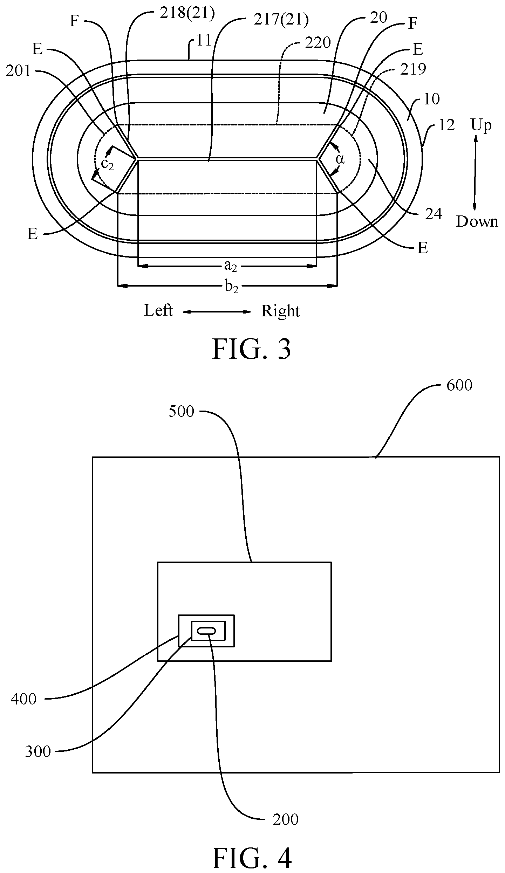

In some other embodiments, as shown in FIG. 3, the scored groove 21 is a double Y-shaped scored groove. The scored groove 21 includes a fourth scored segment 217 in a straight shape and four fifth scored segments 218 in a straight shape. Each of two ends of the fourth scored segment 217 is connected to two fifth scored segments 218 arranged at a preset angle. The preset angle is $\alpha$. In the depth direction of the scored groove 21, a fourth arc segment 219 is defined between free ends of orthographic projections of the two fifth scored segments 218 at the same end of the fourth scored segment 217. The fourth arc segment 219 is centered at a vertex of the preset angle (i.e., $\alpha$). In the depth direction of the scored groove 21, a fourth straight line segment 220 is defined between the free ends of the orthographic projections of the two fifth scored segments 218 on the same side of the fourth scored segment 217. The two fourth arc segments 219 and the two fourth straight line segments 220 jointly constitute the predetermined opening boundary 201.

It should be noted that because widths of the fourth scored segment 217 and the fifth scored segment 218 are relatively small and can be ignored, the fourth arc segment 219 and the fourth straight line segment 220 approximately intersect at one point. The fourth arc segment 219 may be understood as being defined by free ends E at opposing sides of the orthographic projections of the two fifth scored segments 218 located at the same end of the fourth scored segment 217. The fourth straight line segment 220 may be understood as being defined by free ends F at opposing sides of the orthographic projections of the two fifth scored segments 218 located on the same side of the fourth scored segment 217. For example, in the example of FIG. 3, the "fourth arc segment 219" refers to: an arc between the free ends E of the two fifth scored segments 218 located at a left end of the fourth scored segment 217, and an arc between the free ends E of the two fifth scored segments 218 located at a right end of the fourth scored segment 217. The "fourth straight line segment 220" refers to: a straight line between the free ends F of the two fifth scored segments 218 located on an upper side of the fourth scored segment 217, and a straight line between the free ends F of the two fifth scored segments 218 located on a lower side of the fourth scored segment 217.

Specifically, the free ends E of the two fifth scored segments 218 located at the same end of the fourth scored segment 217 refer to: free end points at opposing sides of the two fifth scored segments 218 located at the same end of the fourth scored segment 217. The free ends F of the two fifth scored segments 218 located on the same side of the fourth scored segment 217 refer to: free end points at opposing sides of the two fifth scored segments 218 located on the same side of the fourth scored segment 217. As shown in FIG. 3, in a direction from left to right, the two fifth scored segments 218 at a left end of the fourth scored segment 217 are close to each other to connect to the fourth scored segment 217, and the two fifth scored segments 218 at a right end of the fourth scored segment 217 extend away from each other. In this case, an area of a region defined within the predetermined opening boundary 201 (i.e., the area of the orthographic projection of the opening region 20 in the depth direction of the scored groove 21) is defined as $S_{double-y}$,

$$S_{double-y} = \frac{(a_2 + b_2) \times c_2 \sqrt{2(1 - \cos\alpha)}}{2} + \frac{\pi c_2^2 \alpha}{180},$$

and a total length of the scored groove 21 is $L_{double-y} = a_2 + 4c_2$. $a_2$ represents a length of the fourth scored segment 217, $b_2$ represents a distance between the free ends of the two fifth scored segments 218 located on the same side of the fourth scored segment 217, and $c_2$ represents a length of the fifth scored segment 218.

Therefore, the scored groove 21 of different shapes can change the structural strength of the opening region 20. A suitable scored groove 21 may be selected according to different design standards, thereby reducing the difficulty of the manufacturing process of the explosion-proof valve 200, increasing the pressure relief speed of the explosion-proof valve 200, and improving the safety performance of the battery 300. For example, when the internal pressure of the battery 300 increases, the internal pressure of the battery 300 will squeeze the opening region 20 outward, which is likely to deform the opening region 20. The C-shaped scored groove or the double Y-shaped scored groove can increase the deformation of the opening region 20 to a certain extent to relatively improve the structural strength of the opening region 20, thereby effectively preventing unintentional opening of the explosion-proof valve 200.

Further, a cross section of the scored groove 21 may be rectangular or inverted trapezoidal. "Cross-section" herein refers to a plane parallel to the depth direction of the scored groove 21. When the cross-section of the scored groove 21 is inverted trapezoidal, the width of the scored groove 21 gradually decreases toward the groove bottom of the scored groove 21. In this case, $a_2$ may be understood as a length of an outer edge of the fourth scored segment 217 at the groove top or opening, $b_2$ may be understood as a distance between free ends, which are at the groove top or opening, of the two fifth scored segments 218 located on the same side of the fourth scored segment 217, and $c_2$ may be understood as a length of an outer edge of the fifth scored segment 218 at the groove top or opening.

In some embodiments, as shown in FIG. 1, in the depth direction of the scored groove 21, an outer peripheral edge of the orthographic projection of the connection section 10 includes two second straight line segments 11 arranged in parallel and two second arc segments 12 arranged oppositely. Two ends of each of the second straight line segments 11 are respectively connected to the two second arc segments 12. The two second straight line segments 11 and the two second arc segments 12 constitute a closed annular structure. In the depth direction of the scored groove 21, the outer peripheral edge of the orthographic projection of the connection section 10 is an outer peripheral edge of the orthographic projection of the explosion-proof valve body 100. A length of each of the second straight line segments 11 is defined as A, and a distance between the two second straight line segments 11 is defined as B. The two second straight line segments 11 and the two second arc segments 12 jointly define a closed area. An area of the closed area (i.e., the area $S_{total}$ of the orthographic projection of the explosion-proof valve body 100) may include two semicircles having a radius of 1/2 B and a rectangle having a length A and a width B.

$S_{total}$, A, and B respectively meet: $S_{total}=A\times B+\pi B^2/4$, 10 mm$\leq$A$\leq$70 mm, and 10 mm$\leq$B$\leq$60 mm. Therefore, by defining the dimensions of A and B of the explosion-proof valve body 100 to be within the above ranges, the value of the area $S_{total}$ of the orthographic projection of the explosion-proof valve body 100 in the depth direction of the scored groove 21 can be controlled within a reasonable range, to adapt to batteries 300 of different sizes and facilitate the manufacturing of the explosion-proof valve body 100. For example, A=50 mm, and B=30 mm. However, the present disclosure is not limited thereto.

Further, referring to FIG. 1, the connection section 10 is an elongated ring shape extending in a circumferential direction of the explosion-proof valve body 100, and the outer peripheral edge of the connection section 10 is the outer peripheral edge of the explosion-proof valve body 100. An inner peripheral edge of the orthographic projection of the connection section 10 in the depth direction of the scored groove 21 includes two third straight line segments 13 arranged in parallel and two third arc segments 14 arranged oppositely. Two ends of each of the third straight line segments 13 are respectively connected to the two third arc segments 14. A distance between the two third straight line segments 13 is defined as $B_1$. $S_{connect}$ and $B_1$ respectively meet: $S_{connect}=S_{total}-\pi B_1^2/4-B_1\times A$, and 9 mm$\leq$B$_1$$\leq$59 mm. In other words, the area $S_{connect}$ of the connection section 10 may be a difference between an area defined by a boundary surrounded by the two second straight line segments 11 and the two second arc segments 12 and an area defined by a boundary surrounded by the two third straight line segments 13 and the two third arc segments 14.

If $B_1$<10 mm, the area $S_{connect}$ of the connection section 10 increases, and the area $S_{open}$ of the opening region 20 may not be ensured, which may affect the normal pressure relief of the explosion-proofvalve200. If $B_1$>60 mm, the area $S_{connect}$ of the connection section 10 decreases, which may reduce the connection stability of the connection section 10. When the internal pressure of the battery 300 is too high, the entire explosion-proof valve 200 is likely to be blown open, affecting the safety of the battery 300 and the entire battery system. Therefore, by setting $S_{connect}=S_{total}-\pi B_1^2/4-B_1\times A$ and defining the value range of $B_1$, the area of the connection section 10 can be within a suitable range, thereby ensuring the normal pressure relief of the explosion-proof valve 200 while increasing the connection strength of the connection section 10.

Optionally, the explosion-proof valve body 100 may be configured to be elliptical or racetrack-shaped. Therefore, the explosion-proof valve 200 can better adapt to the shape of the housing of the battery 300 or the shape of the cover plate of the battery 300, increase the amount of gas discharged per unit time, and improve the pressure relief performance of the explosion-proof valve 200.

An embodiment of a second aspect of the present disclosure provides a battery 300, which, as shown in FIG. 4, includes the explosion-proof valve 200 according to the embodiment of the first aspect.

Specifically, the battery 300 further includes a housing (not shown) and a cover plate (not shown). Atleastone end ofthe housing is open formountingthe cover plate. Amounting hole (not shown) is formed in the housing or the cover plate, and the explosion-proof valve 200 is connected at the mounting hole. The connection section 10 of the explosion-proof valve 200 may be connected to the housing or the cover plate by welding.

According to the battery 300 of the embodiment of the present disclosure, with the use of the explosion-proof valve 200, a reliable connection between the explosion-proof valve 200 and the battery 300 and a good pressure relief capability can both be achieved, and the usage safety of the battery 300 can be improved.

In some embodiments, an energy density of the battery 300 is defined as E. E meets: 170 wh/kg≤E≤190 wh/kg. For example, E=180 wh/kg. However, the present disclosure is not limited thereto. Therefore, the energy density of the battery 300 is increased, and the overall performance of the battery 300 is improved. Moreover, the greater the energy of the battery 300, the larger the amount of active material or the higher the activity of material is required inside the battery 300. Such a battery 300 requires a more accurate design of the amount of gas discharged through the explosion-proofvalve 200, so as to ensure timely opening ofthe explosion-proofvalve 200 in extreme cases, and avoid unintentional starting. The explosion-proofvalve200 ofthe above embodiment of the present disclosure can well meet this requirement.

An embodiment of a third aspect of the present disclosure provides a battery module 400, which, as shown in FIG. 4, includes the battery 300 according to the embodiment of the second aspect. For example, the battery module 400 may include a plurality of batteries 300 arranged side by side. The battery module 400 may further include two end plates (not shown) and two side plates (not shown). The two end plates are distributed at two ends of each of the plurality of batteries 300 in a first direction. The two side plates are distributed at two sides of each of the plurality of batteries 300 in a second direction. The end plates and the side plates are fixedly connected to fix the batteries 300. The first direction is perpendicular to the second direction. Of course, in other embodiments, the battery module 400 may further include two end plates and a cable tie (not shown), and the two end plates are distributed at two ends of each of the plurality of batteries 300 and fixed by the cable tie.

With the use of the battery 300 in the battery module 400 of the embodiment of the present disclosure, the usage safety of the battery module 400 is improved.

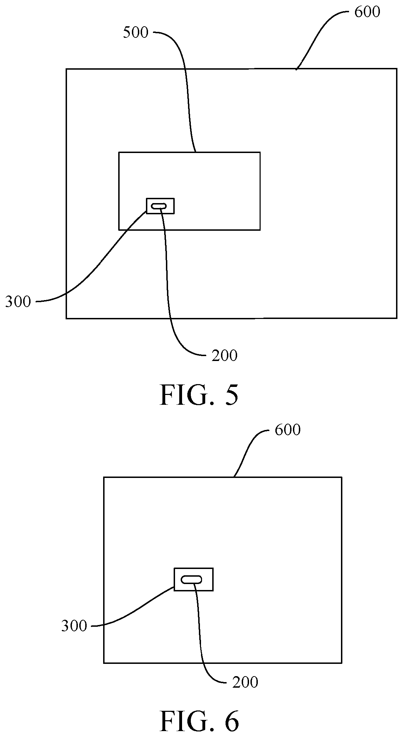

An embodiment of a fourth aspect of the present disclosure provides a battery pack 500, which, as shown in FIG. 4 and FIG. 5, includes the battery 300 according to the embodiment of the second aspect or the battery module 400 according to the embodiment of the third aspect.

With the use of the battery 300 or the battery module 400 in the battery pack 500 of the embodiment of the present disclosure, the usage safety of the battery pack 500 can be improved. For example, the battery pack 500 may include a tray (not shown), and the battery 300 or the battery module 400 is fixed in the tray. When the battery pack 500 is applied to a vehicle 600, the battery pack 500 is mounted on the vehicle 600 through the tray.

An embodiment of a fifth aspect ofthe present disclosure provides a vehicle 600, which, as shown in FIG. 4 to FIG. 6, includes the battery 300 according to the embodiment of the second aspect or the battery pack 500 according to the embodiment of the fourth aspect. For example, in some embodiments, the battery 300 may be directly mounted on the vehicle 600. In some other embodiments, the battery 300 is assembled into a battery pack 500, and the battery pack 500 is mounted on the vehicle 600.

With the use of the battery pack 500 in the vehicle 600 of the embodiment of the fifth aspect of the present disclosure, the usage safety of the vehicle 600 can be improved.

Optionally, the explosion-proof valve 200 may be arranged to face downward to prevent the discharged high-temperature gas from injuring occupants inside the vehicle 600.

In the description of the present disclosure, it should be understood that orientation or position relationships indicated by the terms such as "center", "length", "width", "thickness", "on", "below", "horizontal", "top", "bottom", "inner", and "outer" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

In the description of the present disclosure, "first feature" and "second feature" may include one or more features. In the description of the present disclosure, "multiple" and "a plurality of" mean two or more. In the description of the present disclosure, a first feature being "over" or "below" a second feature may mean that the first feature and the second feature are in direct contact, or the first feature and the second feature are not in direct contact but are in contact through another feature therebetween. In the description of the present disclosure, the first feature being "over", "above", and "on" the second feature includes that the first feature is directly above or obliquely above the second feature, or merely means that the horizontal height ofthe first feature is higher than the horizontal height of the second feature.

In the description of the specification, the description with reference to the terms "an embodiment", "some embodiments", "exemplary embodiments", "example", "specific example", or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

**Claims**

1. An explosion-proof valve (200), comprising:

   an explosion-proof valve body (100), the explosion-proof valve body (100) having a connection section (10) at an edge thereof, a scored groove (21) being provided on the explosion-proof valve body (100), the explosion-proof valve body (100) having an opening region (20), the opening region (20) being located on a radial inner side of the connection section (10),
   a shape of an orthographic projection of the explosion-proof valve body (100) and a shape of an orthographic projection of the opening region (20) in a depth direction of the scored groove (21) being both non-circular, an outer edge of the orthographic projection of the opening region (20) being a predetermined opening boundary (201),
   an area of the orthographic projection of the opening region (20) being defined as $S_{open}$, an area of an orthographic projection of the connection section (10) being defined as $S_{connect}$, and an area of the orthographic projection of the explosion-proof valve body (100) being defined as $S_{total}$, $S_{open}$, $S_{connect}$, and $S_{total}$ meeting: $10\% < S_{connect}/(S_{total}-S_{open}) < 65\%$, and $S_{open}$, $S_{connect}$, and $S_{total}$ being measured in $mm^2$.

2. The explosion-proof valve (200) according to claim 1, wherein the shape of the orthographic projection of the opening region (20) in the depth direction of the scored groove (21) is oblong;

   the scored groove (21) comprises two first straight line segments (211) arranged in parallel and two first arc segments (212) arranged oppositely, two ends of each of the first straight line segments (211) are respectively connected to the two first arc segments (212), and the two first straight line segments (211) and the two first arc segments (212) constitute a closed annular structure; and
   an outer edge of the orthographic projection of the scored groove (21) in the depth direction of the scored groove (21) constitutes the predetermined opening boundary (201).

3. The explosion-proof valve (200) according to claim 2, wherein a length of each of the first straight line segments (211) is defined as a, and a distance between outer sides of the two first straight line segments (211) is defined as b, wherein $S_{open}$, a, and b respectively meet: $S_{open} = a \times b + \pi b^2/4$, 10

   $mm \le a \le 50$ mm, and 3 $mm \le b \le 30$ mm.

4. The explosion-proof valve (200) according to claim 1, wherein the scored groove (21) comprises two first scored segments (213) arranged oppositely and in an arc shape, a second scored segment (214) in a straight shape, and two third scored segments (215) spaced apart from each other and in a straight shape, the second scored segment (214) is arranged in parallel with the third scored segments (215), two ends of the second scored segment (214) are respectively connected to the two first scored segments (213), and each of the third scored segments (215) is connected to the corresponding first scored segment (213); and
   in the depth direction of the scored groove (21), two free ends of the outer edge of the orthographic projection of the scored groove (21) are connected to form a connecting line (216), and the connecting line (216) and the outer edge of the orthographic projection of the scored groove (21) jointly constitute the predetermined opening boundary (201).

5. The explosion-proof valve (200) according to claim 1, wherein the scored groove (21) comprises a fourth scored segment (217) in a straight shape and four fifth scored segments (218) in a straight shape, and each of two ends of the fourth scored segment (217) is connected to two fifth scored segments (218) arranged at a preset angle α; and
   in the depth direction of the scored groove (21), a fourth arc segment (219) is defined between free ends of orthographic projections of the two fifth scored segments (218) at the same end of the fourth scored segment (217), the fourth arc segment (219) is centered at a vertex of the preset angle, a fourth straight line segment (220) is defined between the free ends of the orthographic projections of the two fifth scored segments (218) on the same side of the fourth scored segment (217), and the two fourth arc segments (219) and the two fourth straight line segments (220) jointly constitute the predetermined opening boundary (201).

6. The explosion-proof valve (200) according to any one of claims 1-5, wherein in the depth direction of the scored groove (21), an outer peripheral edge of the orthographic projection of the connection section (10) comprises two second straight line segments (11) arranged in parallel and two second arc segments (12) arranged oppositely, two ends of each of the second straight line segments (11) are respectively connected to the two second arc segments (12), and the two second straight line segments (11) and the two second arc segments (12) constitute a closed annular structure; and
   in the depth direction of the scored groove (21), the outer peripheral edge of the orthographic projection of the connection section (10) is an outer peripheral edge of the orthographic projection of the explosion-proof valve body (100).

7. The explosion-proof valve (200) according to claim 6, wherein a length of each of the second straight line segments (11) is defined as A, and a distance between the two second straight line segments (11) is defined as B, wherein $S_{total}$, A, and B respectively meet: $S_{total}=A\times B+\pi B^2/4$, 10 mm$\leq$A$\leq$70 mm, and 10 mm$\leq$B$\leq$60 mm.

8. The explosion-proof valve (200) according to claim 7, wherein the connection section (10) is an elongated ring shape extending in a circumferential direction of the explosion-proof valve body (100), an inner peripheral edge of the orthographic projection of the connection section (10) in the depth direction of the scored groove (21) comprises two third straight line segments (13) arranged in parallel and two third arc segments (14) arranged oppositely, two ends of each of the third straight line segments (13) are respectively connected to the two third arc segments (14), and a distance between the two third straight line segments (13) is defined as $B_1$, wherein $S_{connect}$ and $B_1$ respectively meet: $S_{connect}=S_{total}-\pi B_1^2/4-B_1\times A$, and 9 mm$\leq$B$_1\leq$59 mm.

9. The explosion-proof valve (200) according to any one of claims 1-8, wherein the explosion-proof valve body (100) is elliptical or racetrack-shaped.

10. The explosion-proof valve (200) according to any one of claims 1-9, wherein 80 mm$^2\leq$S$_{open}\leq$1600 mm$^2$, and 178.5 mm$^2\leq$S$_{total}\leq$5212.5 mm$^2$.

11. A battery (300), comprising the explosion-proof valve (300) according to any one of claims 1-10.

12. The battery (300) according to claim 11, wherein an energy density of the battery (300) is defined as E, wherein E meets: 170 wh/kg$\leq$E$\leq$190 wh/kg.

13. A battery module (400), comprising the battery (300) according to claim 11 or 12.

14. A battery pack (500), comprising the battery (300) according to claim 11 or 12 or the battery module (400) according to claim 13.

15. A vehicle (600), comprising the battery (300) according to claim 11 or 12 or the battery pack (500) according to claim 14.

FIG. 1

FIG. 2

FIG. 3

FIG. 4

FIG. 5

FIG. 6

## INTERNATIONAL SEARCH REPORT

| International application No. |
|---|
| **PCT/CN2023/093513** |

### A. CLASSIFICATION OF SUBJECT MATTER

H01M50/342(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 防爆阀, 边缘, 连接, 焊接, 开启, 刻痕槽, 面积, explosion-proof valve, edge, connect, weld, open, notch groove, area

### C. DOCUMENTS CONSIDERED TO BE RELEVANT

| Category* | Citation of document, with indication, where appropriate, of the relevant passages | Relevant to claim No. |
|---|---|---|
| PX | CN 216980796 U (BYD CO., LTD.) 15 July 2022 (2022-07-15)<br>description, paragraphs 31-63, and figures 1-3 | 1-15 |
| Y | CN 113794028 A (BATTERO NEW ENERGY TECHNOLOGY CO., LTD.) 14 December 2021 (2021-12-14)<br>description, paragraphs 4-48, and figure 1 | 1-15 |
| Y | CN 113544890 A (NINGDE AMPEREX TECHNOLOGY LTD.) 22 October 2021 (2021-10-22)<br>description, paragraphs 78-161, and figures 1-9 | 1-15 |
| A | CN 210723194 U (SVOLT ENERGY TECHNOLOGY CO., LTD.) 09 June 2020 (2020-06-09)<br>entire document | 1-15 |
| A | CN 212277341 U (RISESUN MGL NEW ENERGY TECHNOLOGY CO., LTD.) 01 January 2021 (2021-01-01)<br>entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/093513**

### C.    DOCUMENTS CONSIDERED TO BE RELEVANT

| Category* | Citation of document, with indication, where appropriate, of the relevant passages | Relevant to claim No. |
|---|---|---|
| A | CN 215816251 U (XIAMEN HAICHEN NEW ENERGY TECHNOLOGY CO., LTD.) 11 February 2022 (2022-02-11)<br>entire document | 1-15 |
| A | JP 2014049398 A (KOJIMA PRESS KOGYO K. K. et al.) 17 March 2014 (2014-03-17)<br>entire document | 1-15 |

Form PCT/ISA/210 (second sheet) (July 2022)

**INTERNATIONAL SEARCH REPORT**
Information on patent family members

International application No.

**PCT/CN2023/093513**

| Patent document cited in search report | | | Publication date (day/month/year) | Patent family member(s) | | | Publication date (day/month/year) |
|---|---|---|---|---|---|---|---|
| CN | 216980796 | U | 15 July 2022 | None | | | |
| CN | 113794028 | A | 14 December 2021 | None | | | |
| CN | 113544890 | A | 22 October 2021 | WO | 2022032473 | A1 | 17 February 2022 |
| CN | 210723194 | U | 09 June 2020 | None | | | |
| CN | 212277341 | U | 01 January 2021 | None | | | |
| CN | 215816251 | U | 11 February 2022 | US | 2023084778 | A1 | 16 March 2023 |
| JP | 2014049398 | A | 17 March 2014 | JP | 5876794 | B2 | 02 March 2016 |

Form PCT/ISA/210 (patent family annex) (July 2022)

## REFERENCES CITED IN THE DESCRIPTION

**Patent documents cited in the description**

- CN 202221128927X